# EUROPEAN PATENT SPECIFICATION

(11) **EP 1 937 948 B1**
(45) Date of publication and mention of the grant of the patent: **04.01.2012**
(21) Application number: 06779416.4
(22) Date of filing: 14.09.2006
(51) Int. Cl.: F02B 37/18, F01D 17/10, F01D 17/14

(54) **VARIABLE TURBOCHARGER APPARATUS WITH BYPASS MEANS FOR BYPASSING EXHAUST GASES**
VARIABLE TURBOLADERVORRICHTUNG MIT UMLEITUNGSMITTELN ZUM UMLEITEN VON ABGASEN
APPAREIL TURBOCOMPRESSEUR VARIABLE AVEC MOYENS DE DÉRIVATION DESTINÉS À DÉRIVER DES GAZ D ÉCHAPPEMENT

(30) Priority: 15.09.2005 GB 0518883
(43) Date of publication of application: 02.07.2008
(73) Proprietor: LEAVESLEY, Malcolm George, Bow, London E3 2DW (GB)
(72) Inventor: LEAVESLEY, Malcolm George, Bow, London E3 2DW (GB)
(74) Representative: Jones, Graham Henry
(86) International application number: PCT/GB2006/003404
(87) International publication number: WO 2007/031752

(56) References cited:
- EP-A- 0 034 915
- EP-A1- 0 081 255
- DE-A1- 3 839 968
- GB-A- 1 554 074
- US-A- 4 292 807
- US-B1- 6 715 288

## Description

This invention relates to variable turbocharger apparatus and, more especially, this invention relates to variable turbocharger apparatus with bypass means for bypassing exhaust gases.

Variable turbocharger apparatus is known comprising a housing, a compressor mounted for rotation in the housing, a turbine mounted for rotation in the housing, a first inlet for enabling air to be conducted to the compressor, an outlet for enabling air from the compressor to be conducted to an engine, a second inlet for enabling exhaust gases from the engine to be conducted to the turbine in order to rotate the turbine, a chamber which extends around the turbine and which receives the exhaust gases from the second inlet before the exhaust gases are conducted to the turbine, a bearing assembly for permitting rotation of the turbine, a heat shield for shielding the bearing assembly from the exhaust gases, and control means for controlling the speed of the turbine.

A problem which occurs with using any known turbocharger apparatus on an internal combustion engine is that there is a temperature drop in the exhaust gases once the exhaust gases have passed through the turbine. This problem occurs irrespective of whether the internal combustion engine is a petrol engine or a diesel engine. The temperature drop may be helpful in some ways such for example as enabling catalyst systems and particulate filters to be mounted closer to the engine without overheating. However, the temperature drop in the exhaust gases acts against the efficient operation of the catalyst systems at start up conditions. At start-up conditions, the catalyst systems need to be heated as quickly as possible to their working temperature. The temperature drop of the exhaust gases may also work against the efficient operation of the particulate filters and/or particulate traps in that the exhaust gas temperature may drop too low to satisfactorily burn off the particulate matter in the particulate filter or particulate trap in diesel engines.

It is an aim of the present invention to obviate or reduce the above mentioned problems.

EP 0034915 A discloses variable turbocharger apparatus having a slidable piston for closing or restricting an area over a turbine. DE 3839968 A1 discloses turbocharger apparatus having a bypass with a dedicated valve.

The present invention provides variable turbocharger apparatus comprising a turbine housing, a turbine mounted for rotation in the turbine housing, an inlet for enabling exhaust gases from an engine to be conducted to the turbine in order to rotate the turbine, a chamber which extends around the turbine and which receives the exhaust gases from the inlet before the exhaust gases are conducted to the turbine, an outlet for the exhaust gases, a bearing assembly for permitting the rotation of the turbine, a slidable piston for closing or restricting an area over the turbine, and bypass means for bypassing exhaust gases, and characterized by control means which is for controlling the sliding movement of the piston and the bypass means such that the control of the sliding movement of the piston is independent of the control of the bypass means, the control means comprising a first control arrangement for controlling the sliding piston, and a second control arrangement for controlling the bypass means, and the variable turbocharger apparatus being able to be controlled such that when the piston is in a position for closing or restricting the area over the turbine then the exhaust gases are able to be bypassed by the bypass means such that the exhaust gases bypass the turbine.

The variable turbocharger apparatus of the present invention may operated to prevent a drop in temperature of the exhaust gases as would occur if the exhaust gases passed through the turbine, whereby a higher exhaust gas temperature at the outlet is achieved than would be the case if the exhaust gases passed through the turbine.

The variable turbocharger apparatus of the present invention may be used to maintain high efficiency in the area of improved performance coupled with lower emissions in that the higher exhaust gas temperature at the outlet is available for quickly heating up a catalyst system and/or is available for burning off particular matter in particulate filter and/or particulate trap systems. The variable turbocharger apparatus of the present invention may allow exhaust gases to be sent directly to a catalyst system, in order to preheat the catalyst system to operating temperature as quickly as possible. This permits hydrocarbons to be degraded and may significantly improve overall emissions by eliminating a large quantity of unburned hydrocarbons on start up. The variable turbocharger apparatus of the present invention may be used in conjunction with a catalyst system and/or a particulate filter and/or a particulate trap system. In other words, the variable turbocharger apparatus of the present invention may be used with either one or any combination of the catalyst system, the particulate filter and the particulate trap system.

The variable turbocharger apparatus of the present invention may be able to control the exhaust gas flow over the turbine accurately throughout the flow range. Because the turbine is able to be controlled over the turbine, when the bypass means is closed, there is no pressure drop within a volute chamber of the turbine housing so that an instant response of the turbine is able to be achieved.

In order to prevent oil leakage from the bearing assembly, the piston may be set so as to allow a small amount of exhaust gases passed the piston when the piston is in the position for closing or restricting the area over the turbine. If desired, the piston may be set to a start gap over the turbine area.

The variable turbocharger apparatus may allow for a reduction in the turbine housing volute size. This in tum may provide a quicker turbine response time of the turbocharger apparatus at the bottom part of the flow range. The bypass means may be used in conjunction with the piston such that the bypass means operates the bypass at the top part of the flow range, thereby allowing for improved low down response of the turbine. Improved low down response of the turbine allows for improved fuel consumption and lower emissions at the lower part of the flow range.

The use of a smaller sized turbine housing may help to reduce the time taken to heat the catalyst system. Thus a smaller sized turbine housing complements the use of the bypass means for speedily heating the catalyst system at start up conditions.

The variable turbocharger apparatus may be one in which the first control arrangement is connected to the sliding piston.

The variable turbocharger apparatus may operate such that the first and second control means are controlled such that higher temperature exhaust gases from the outlet of the variable turbocharger apparatus are used to preheat a catalyst system.

The variable turbocharger apparatus may be one in which the control means controls the piston and bypass means such that higher pumping losses are able to be produced on the engine in order to put the engine under load.

The variable turbocharger apparatus may be one in which the control means controls the piston and the bypass means such that higher pumping losses are produced on an engine in order to put the engine under a load when regeneration of a particulate filter system is required, in order to allow fueling of the engine such as to increase exhaust gas temperature.

Alternatively or in addition, the variable turbocharger apparatus may be such that the control means operates to control the piston such as to maintain a given boost pressure when the bypass system is used in conjunction with the piston such that a higher exhaust gas temperature is able to be achieved in the exhaust outlet of the turbocharger in order to allow the higher temperature gases to bum off particulate matter. More specifically, with such variable turbocharger apparatus, an engine may be fueled so that a higher exhaust gas temperature can be achieved in the exhaust outlet of the turbocharger. The higher temperature gas flow may then be used to bum off particulate matter. The variable turbocharger apparatus may also allow a smaller size volute turbine housing to be used, thereby allowing quicker preheating of the catalyst system, and also allowing improvements in low down performance of the variable turbocharger apparatus.

Alternatively or in addition, the variable turbocharger may be one in which the control means are such that the bypass system is allowed to bypass gas flow at the top part of the flow range when used in conjunction with the piston such that a smaller sized volute turbine housing is able to be used in order to reduce preheating time of a catalyst system and to improve low down response time of the turbine, for example in diesel or petrol engines.

The variable turbocharger apparatus may be one in which the control means controls the slidable piston and the bypass means such that when the piston is moved to the position in which it restricts the area over the turbine, the bypass means controls the boost pressure such as to maintain a given boost pressure.

The variable turbocharger apparatus may be one in which the control means controls the piston and bypass means such that when used in a twin turbocharger application the slidable piston is able to control the first and second stages of the twin turbocharger apparatus. Thus, for example, the variable turbocharger apparatus may be one which is used in a twin turbocharger application, and in which the slidable piston is able to control the first and second stages of the twin turbocharger apparatus such that when the piston is in a closed or restricted position for closing or restricting the area over a second stage turbine, the exhaust gases are directed to the first stage turbine such that when a given boost pressure is reached on the first stage turbocharger, the slidable piston is able to control the boost pressure of the first stage turbocharger and direct exhaust gases through to the second stage turbine such that the slidable piston is able to control the boost pressure of the first and second stage turbochargers.

The variable turbocharger apparatus of the present invention may be for a twin turbocharger application, and in which the control mean controls the the piston and bypass means such that when used in the twin turbocharger application the slidable piston and bypass on the second stage turbocharger are able to be controlled such that the piston is able to be kept in a closed or restricted position in order to prevent or restrict gas flow through the second stage turbine, and the bypass on the second stage turbocharger is able to bypass and control the boost pressure of the first stage turbocharger and allow exhaust gases to bypass the second stage turbine.

The variable turbocharger apparatus may be one in which the control means controls the piston and the bypass means such as to allow the variable turbocharger apparatus to be used for engine braking.

The variable turbocharger apparatus may be one in which the piston is controlled directly over the turbine, whereby pressure is maintained within the volute chamber of the turbine housing when the bypass system is being used in order to maintain an instant response of the turbine.

The variable turbocharger apparatus may be one in which the piston has a setting such as to allow a small amount of exhaust gases passed the piston in order to allow rotation of the turbine when the piston is in a restricted position, thereby to prevent oil leakage from the bearing assembly.

The variable turbocharger apparatus may be one in which the piston is slidable over a bypass exit area, whereby the exhaust gases exiting the bypass means are encouraged to flow around the piston in order to allow for an improved mixing of the gases flowing from the bypass means with the gases flowing from the turbine.

The turbine housing may be formed such that the hot gases from the bypass means and the turbine are prevented from working on parts of the control means that controls movement of the piston.

The bypass exit may be formed in the turbine housing outlet.

The bypass means may be a swing valve bypass means.

The turbine housing may be formed with the exhaust outlet without a separate end cover. This may enable the variable turbocharger apparatus to be produced in an especially compact manner. Such a compact design may allow for a catalyst system and/or a particulate filter system to be mounted close to the variable turbocharger apparatus. This allows quick pre-heating of the catalyst system and/or allows easier regeneration of the particulate filter due to burning off of the particulate matter. The ability to have a turbine housing without a separate end cover allows for machining to be reduced, and also a reduction in manufacturing costs.

The variable turbocharger apparatus may be one in which the piston is insertable into the turbine housing such that the piston is allowed to locate onto a fork or lever control means, without having to swing the fork or lever over the piston to locate the piston.

Alternatively or in addition, the variable turbocharger apparatus may be one in which the piston is insertable into the turbine housing and is locatable onto the fork or lever of the control means in order to allow controlled movement of the piston over the turbine, the variable turbocharger apparatus being such that a bypass passage is formed within the turbine housing exit area, whereby exhaust gases from the bypass passage may be encouraged to flow around the piston when exiting the bypass passage.

Alternatively or in addition, the variable turbocharger apparatus may be one in which the piston is insertable into the turbine housing such that the piston is allowed to locate onto the fork or lever of the control means, and when rotated is such that the fork or lever of the control means is prevented from disengaging from the piston.

The variable turbocharger apparatus may include a removable insert, the insert being such that it has vanes. The removable insert with the vanes may be held in place such that the ends of the vanes are held against a heat shield or bearing assembly in order to allow accurate gas flow around the ends of the vanes.

Alternatively, the variable turbocharger may include a non-removable insert in which the piston slides.

Alternatively, the variable turbocharger apparatus may be one in which the piston is slidable in a bore of a first insert, and in which the piston is slidable in a bore of a second insert.

The variable turbocharger may be one in which the piston has a flange, and in which the flange has slots for enabling the flange to slide over the vanes on the insert. The piston may be prevented from rotation by a flange on the piston, the flange being able to slide over the vanes on the insert in order to prevent rotation of the piston. The exhaust gases may be allowed to work on both sides of the flange on the piston, thereby to prevent a high exhaust gas pressure on one side of the flange. The variable turbocharger apparatus may be one in which exhaust gases are allowed to work both sides of the flange such that there is no exhaust gas pressure drop between the vanes and the slots in the flange when controlling the gas flow onto the turbine.

The variable turbocharger apparatus may be one in which the piston has a stop ring, and in which the stop ring has a groove for allowing the control means to locate and thereby control movement of the piston, and in which the stop ring has at least one slot for allowing the piston to locate onto the control means.

Alternatively, the variable turbocharger apparatus may be one in which the piston has a stop ring, and in which the stop ring has a groove for allowing the control means to locate and thereby control movement of the piston, and whereby the stop ring is used to form a stop in order to set a gap over the turbine wheel.

Alternatively, the variable turbocharger apparatus may be one in which the piston has a stop ring, and in which the stop ring is allowed to butt against an end of the insert in the turbocharger apparatus such as to set a gap over the turbine.

The variable turbocharger apparatus of the present invention may be one which includes an insert, in which the insert has vanes, and in which a spring is mounted on the insert such that when the variable turbocharger apparatus is assembled, the spring abutts against the turbine housing and the insert and pushes the end of the vanes against a heat shield or the bearing assembly.

The variable turbocharger apparatus of the present invention may include a sealing ring for preventing gas leakage between the insert and the piston.

An end of the piston may be allowed to slide in a bore of the turbine housing in order to prevent sideways movement of the piston and to prevent hot gases working on the control means that controls movement of the piston.

The variable turbocharger apparatus may include a heat shield, which is formed as part of the bearing assembly. Alternatively, the variable turbocharger apparatus may include a heat shield which is not formed as part of the bearing assembly.

The variable turbocharger apparatus may include vanes, and the vanes may be formed on the heat shield. Alternatively, the variable turbocharger apparatus may include vanes and the vanes may be formed as part of the piston.

The variable turbocharger apparatus may be one in which vanes formed as part of the heat shield or the piston are used to set a gap over the turbine, between the piston and the heat shield. Alternatively, the variable turbocharger may be one in which the vanes are allowed to slide through slots in a heat shield.

The variable turbocharger apparatus may include an insert and a spring mounted on the insert such that when the variable turbocharger apparatus is assembled, the spring abuts against the turbine housing and the insert, and is such as to prevent exhaust gas leakage between the turbine housing and the insert.

The variable turbocharger apparatus may be a single turbocharger unit or a twin turbocharger unit.

The variable turbocharger apparatus may be one in which the turbocharger turbine speed is able to be controlled by the piston without using the bypass means when the higher exhaust gas temperature is not needed. Once the hot exhaust gases have pre-heated the catalyst system and/or the hot exhaust gases are not required for burning off particulate matter, then the variable geometry turbocharger apparatus may operate using the piston only, or may operate using the piston and the bypass at the top part of the exhaust gas flow range.

When the variable turbocharger apparatus is one in which the piston has a flange with slots provided on the end of the piston that controls the area over the turbine, then the flange may be allowed to slide over the vanes such as to allow an accurate gas flow between the flange and the gap over the turbine, this being throughout the operating range of the variable turbocharger apparatus. The flange may additionally be used to prevent rotation of the piston. The flange may also allow exhaust gas pressure to work both sides of the flange in order to prevent a high pressure side load on one side of the flange. The flange may have a chamfer on one side of the flange for allowing exhaust gases to work on both sides of the flange when the piston is in a closed position. The piston with flange design may be such that when the exhaust gases work both sides of the flange, there is be no exhaust gas pressure drop between the vanes and the slots in the flange when controlling the gas flow onto the turbine.

The use of guide vanes may allow the exhaust gases to be guided accurately onto the turbine. The flange on the end of the piston allows for an accurate gas flow to be maintained when controlling the gas flow throughout the flow range of the variable turbocharger apparatus. Thus the performance of the variable turbocharger apparatus is able to be enhanced.

When exhaust gases are allowed to work both sides of the flange, then side pressure on the control means is low. This reduced wear on components of the control means allows for the control system to be an electronic control system due to the side load being low or, if desired, an air or oil-operated control system may be used.

When the stop ring is allowed to abut against the insert, this also prevents exhaust gas leakage passed the outside diameter of the piston and the bore of the insert. When allowing a small gap for the purpose of allowing some gases to work on the turbine, a sudden pressure drop when moving the piston to control the boost pressure of the variable turbocharger apparatus is also avoided.

The variable turbocharger apparatus may be one in which the turbine housing is a machined turbine housing, and in which a bypass valve locates in a bush and swings into place without the need for an end cover on the turbine housing, the system only requiring a small plate to cover the bypass valve area, thereby reducing manufacturing costs and assembly time.

Embodiments of the invention will now be described solely by way of example and with reference to the accompanying drawings in which:
Figure 1 is a section through first variable turbocharger apparatus, and shows a piston assembly with a piston in a closed position, and also bypass means with the bypass means being in a closed position;
Figure 2 is a section through second variable turbocharger apparatus, and shows a piston assembly with a piston in a fully opened position, and a bypass means in an open position;
Figure 3 is a section through third variable turbocharger apparatus, and shows a long section removable insert, with a spring moved away from a volute area of a turbine housing;
Figure 4 is a top sectional view showing bypass means, a turbine housing machine such as to allow easy assembly of a bypass valve, and how an exhaust bypass is formed in an exit area of the turbine housing;
Figure 5 is an end section view showing an exhaust bypass and how exhaust gases are able to be guided from the exhaust bypass around a piston area in order to improve mixing of exhaust gas flows;
Figure 6 shows how a bypass valve may swing around bolt holes, and may slide into a bushing, allowing for easy assembly such that the turbine housing does not need an end cover;
Figure 7 is a suction through fourth variable turbocharger apparatus, and shows a short vane section whereby vanes do not have to go through slots; and
Figure 8 is a section through fifth variable turbocharger apparatus, and shows a piston with vanes such that the vanes slide through slots in a heat shield.

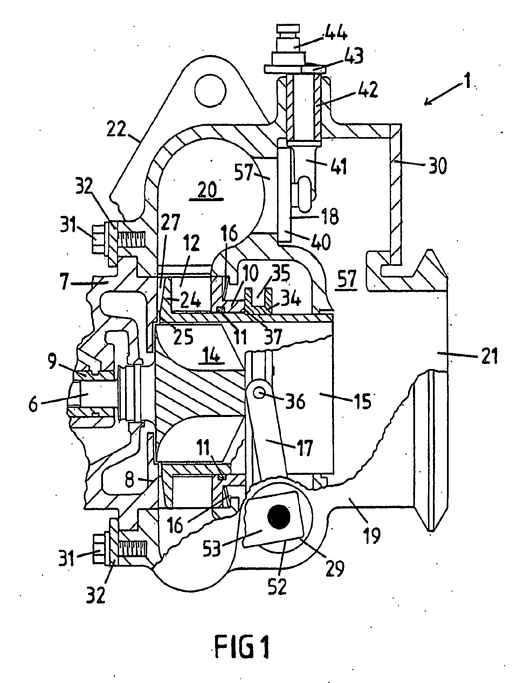

Referring to Figure 1, there is shown a section through variable turbocharger apparatus 1 with bypass means for bypassing exhaust gases. The variable turbocharger apparatus 1 comprises a turbine housing 19 and an inlet 22. The inlet 22 is for enabling exhaust gases from an engine to be conducted to a turbine 14 in order to rotate the turbine 14. A chamber 20 extends around the turbine 14 and receives exhaust gases from the inlet 22 before the exhaust gases are conducted to the turbine 14. A bearing assembly 7 permits rotation of the turbine 14. A heat shield section 8 is provided for shielding the bearing assembly 7 from heat from the exhaust gases. The bearing assembly 7 has bearings 9 in which a turbine shaft 6 rotates.

The variable turbocharger apparatus 1 also comprises fixed vanes 12. The fixed vanes 12 are mounted in the chamber 20. The fixed vanes 12 are for accurately directing the exhaust gases onto the turbine 14. A piston 15 is positioned between the fixed vanes 12 and the turbine 14. The piston 15 is a slidable piston 15.

The turbocharger apparatus 1 includes first control means 29. The control means 29 includes a fork 17. The control means 29 controls the sliding movement of the piston 15. The piston 15 has an end 25 which is adjacent the heat shield section 8. The end 25 is spaced apart from the heat shield section 8 by a gap 27. Figure 1 shows the piston 15 in a closed position in which the gap 27 is at its smallest condition. The gap 27 allows a small amount of exhaust gases passed the piston 15 in order to allow rotation of the turbine 14 and thereby to prevent oil leakage from the bearing assembly 7.

The size of the gap 27 is variable in dependence upon the sliding of the piston 15. The sliding of the piston 15 is under the general control of the control means 29. The size of the gap 27 is effective to control the amount of exhaust gases that acts upon the turbine 14, thereby accurately controlling the speed of rotation of the turbine 14.

The variable turbocharger apparatus 1 also comprises a piston assembly. The piston assembly comprises an insert 10, a piston 15 and a spring 16. The piston assembly is such that the piston 15 slides in a bore in the insert 10. The insert 10 has vanes 12. The piston 15 has a flange 24. the flange 24 has slots (not shown). The slots allow the flange 24 to slide over the vanes 12 on the insert 10.

A stop ring 34 is fixed to the piston 15. The stop ring 34 has a groove 35. The stop ring 34 also has slots (not shown). The slots in the stop ring allow a section 36 of the fork 17 of the control means 29 to enter into the groove 35.

The assembly of the variable turbocharger apparatus 1 is such that the piston assembly slides into the turbine housing 19. The piston assembly is located in position onto the control means 29. The piston assembly is then rotated in order to lock the piston assembly to the control fork 17 of the control means 29. The bearing assembly 7, the heat shield 8 and the turbine 14 are then able to be located in the turbine housing 19, and then clamped in position using a clamp 32. The clamp 32 pushes the heat shield section 8 against the end of the vanes 12. This puts pressure on the spring 16, which is located between the turbine housing 19 and the insert 10. The spring pressure from the spring 16 allows a seal between the insert 10 and the turbine housing 19. The spring 16 also prevents rotation of the insert 10, thereby allowing the piston assembly to be locked in place. If desired, a location lug may be used to locate the insert 10 in the turbine housing 19 at a set position.

As shown in Figure 1, the variable turbocharger apparatus 1 sets a gap 27 when the piston 15 is in a closed position. This gap 27 allows some of the gas flow to work on the turbine 14 in order to allow rotation of the turbine 14 and thereby prevent oil leakage from the bearing assembly 7. If desired, the gap over the turbine 14 may be set as the start gap. The gap is set by allowing the stop ring 34 to butt against the end 37 of the insert 10. This also prevents exhaust gas leakage passed the insert 10 and the piston 15 when the piston 15 is in a closed position. In order to prevent exhaust gas leakage when the piston 15 is moving within the bore of the insert 10, a sealing ring 11 is fitted to the insert 10.

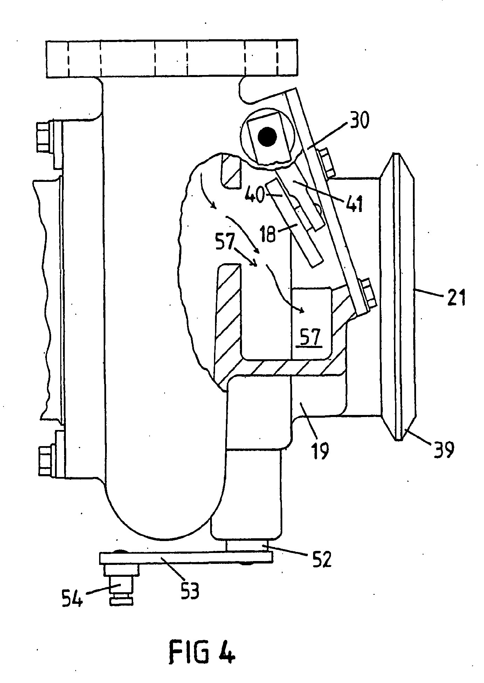

Figure 1 shows the variable turbocharger apparatus 1. Figure 4 shows a top view of the variable turbocharger apparatus 1. Figures 1 and 4 show a fork 17. The fork 17 moves a piston 15. The fork 17 uses a rod (not shown) that works within a bush 52. The rod is connected to the fork 17 and a lever 53 in order to allow rotational movement of the fork 17. The connection 54 on the lever 53 allows the variable turbocharger apparatus shown in Figures 1 and 4 to be connected to a control unit (not shown) forming part of the control means 29. The control unit may be an actuator control unit or an electronic control unit.

Figure 1 also shows how the piston 15 is allowed to work within the turbine housing 19 in order to prevent hot gases working on the control parts 29 within the variable turbocharger apparatus 1.

Figure 1 further shows the variable turbocharger apparatus 1 with bypass means. The bypass means is in a closed position and comprises a waste gate-type bypass system. More specifically, the waste gate-type bypass system comprises a round disk 40 which forms a valve that is held in place by a rod 41. The rod 41 is allowed to rotate within a bush 42. The rod 41 is connected to a lever 43 which forms a second control arrangement for controlling the bypass means 18. The lever 43 has a connection 44. The connection 44 and the lever 43 allows the bypass means of the variable turbocharger apparatus 1 to be connected to a control unit (not shown). The control unit may be an actuator control unit or an electronic control unit.

Figures 1, 2, 4 and 5 show a bypass passage 57. The bypass passage 57 is formed within a turbine housing 19 such that the bypass passage 57 allows exhaust gases to bypass the bypass passage 57, and thereby to encourage gas flow around the piston 15 when the piston 15 is in an open position. This allows for an improved mixing of the gas flow of the gases exiting the bypass 57 with the gases exiting the turbine 14. If desired, a longer section piston may be used in order to allow mixing of the gas flow at lower flow rates.

Figure 1 also shows how the bypass 57 is formed in the turbine housing 19 such that the bypass 57 exits into the exit area 21 of the turbine housing 19. The turbine housing 19 is such that the turbocharger apparatus 1 does not need an end cover on the turbine housing in order to assemble the variable turbocharger apparatus 1.

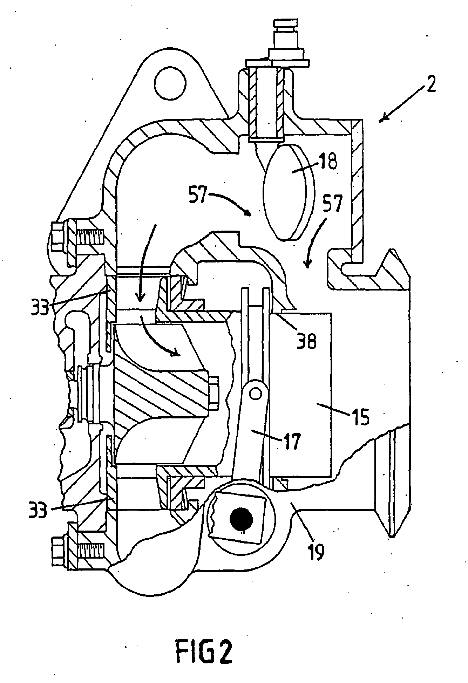

Referring now to Figure 2, there is shown variable turbocharger apparatus 2 with bypass means for bypassing exhaust gases. Similar parts in Figure 2 and also in subsequent Figures to parts in Figure 1 have been given the same reference numerals for ease of comparison and understanding.

In Figure 2, it will be seen that the piston 15 and the bypass 18 are in an open position. Figure 2 also shows how exhaust gases exiting the exit area of the bypass 57 are able to be allowed to rotate around the end of the piston 15. This allows for an improved mixing of the exhaust gas flow with gases that are exiting the turbine. If desired, a longer section piston may be used in order to improve the mixing at lower flow rates.

Figure 2 also shows a bearing assembly with a separate heat shield 33. Vanes may be employed which may be part of the heat shield 33 or part of the insert. If desired, the sealing ring may be omitted as shown in Figure 2. Alternatively, a sealing ring may be mounted within the piston or the insert.

Figure 2 further shows how the fork 17 is only allowed to move within the turbine housing 19 by an amount that is needed to control the area over the turbine 14. The fork 17 does not have to swing over the piston assembly to locate the piston assembly. This means that the fork 17 only has to move the required distance that the piston 15 needs to move, in order to control the area over the turbine 14. This facilitates the manufacture of a compact variable turbocharger apparatus.

Figure 2 further shows how the end of the piston 15 is kept within the bore 38 of the turbine housing 19. This is to protect the control parts and the spring from hot exhaust gases.

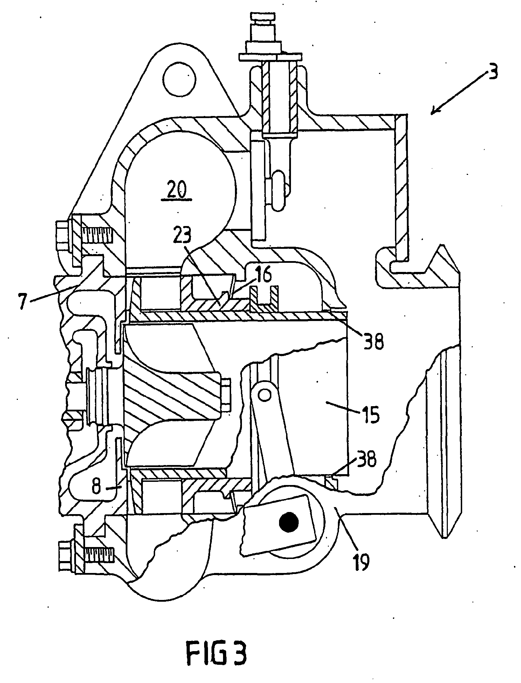

Referring now to Figure 3, similar parts as in previous Figures have again been given the same reference numerals for ease of comparison and understanding. Figure 3 shows variable turbocharger apparatus 3 with bypass means for bypassing the exhaust gases. The variable turbocharger apparatus 3 is of the same design as shown in Figure 1, except that the insert 23 shown in Figure 3 is of a longer design. This longer design of the insert 23 enables the spring 16 to be moved away from the volute chamber area 20 of the turbine housing 19, in order to reduce heat transfer to the spring 16. The longer insert 23 also allows the piston 15 to be supported by the insert only, so that a small gap may be allowed on the turbine housing area 38 in order to prevent ware in this area on hot applications of the variable turbocharger apparatus.

The variable turbocharger apparatus 3 shown in Figure 3 is such that if desired on hot applications of the variable turbocharger apparatus 3, the insert, piston and spring assembly may be made of a ceramic material or of a material of a different expansion rate to that of the turbine housing. This is possible with the design of the variable turbocharger apparatus 3 shown in Figure 3 because the insert, piston and spring are a removable assembly. The removable assembly allows for different expansion rates between the different materials of the turbine housing and the insert assembly.

Figure 3 further shows the heat shield section 8 of the bearing assembly 7 being formed as part of the bearing assembly 7. If desired, a floating heat shield design may be used as shown in Figure 2. Alternatively a heat shield may be used that is clamped between the turbine housing and the bearing assembly.

Referring now to Figure 4, there is shown a top view of variable turbocharger apparatus with bypass means 18 for bypassing exhaust gases. The bypass means 18 is shown in an open position. Also shown is the exhaust gas flow path through the bypass means, which exhaust gas flow path is formed within the turbine housing.

Figure 4 also shows how the turbine housing is machined at an angle in order to allow easy assembly of the bypass means, whereby when the plate 30 is removed, the assembly of the bypass means is such that the bypass rod 41 slides within the bush 42, and swings the valve disc 40 into place before the top lever 43 is assembled onto the rod 41.

Figure 4 further shows the lever 53 with the connection 54. The connection 54 is connected to a control rod (not shown) which controls movement of the fork 17. The control rod is allowed to rotate within the bush 52.

The design of the variable turbocharger apparatus shown in Figure 4 allows for an easy and cost-effective assembly of the bypass means. An end cover is not required to be used on the turbine housing. This allows the machining of the turbine housing as a single unit, with the exhaust gas outlet 21 and the exhaust outlet clamping area 39.

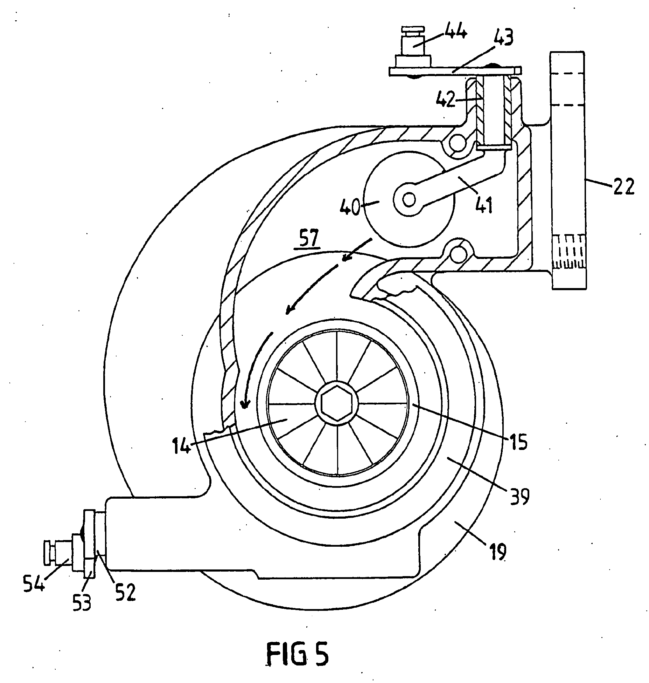

Figure 5 shows variable turbocharger apparatus with bypass means for bypassing exhaust gases. Figure 5 shows the flow path of the exhaust gases when the gas flow leaves the bypass means. The gas flow is allowed to rotate around the end of the piston 15. This allows for a good mixing of the gas flow of the exhaust gases leaving the bypass means with the exhaust gases that exit the turbine wheel. This improved gas mixing facilitates an improved performance of the variable turbocharger apparatus.

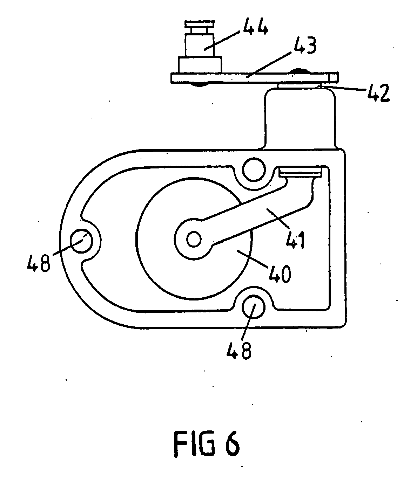

Referring now to Figure 6, there is shown an end view of the clamping area of the plate 30. More specifically, there is shown the clamping area where the plate 30 bolts onto the turbine housing in order to cover the bypass means. Bolt holes 48 are formed inside the bypass area in order to reduce stamping costs of the plate 30, and also to reduce the size of the plate 30. If desired, the bolt holes may alternatively be formed on the outside of the bypass area.

Figure 6 also shows how the rod 41 is allowed enough room to slide within the bush 42 when assembling the bypass means, and before fitting the lever 43 to the rod 41.

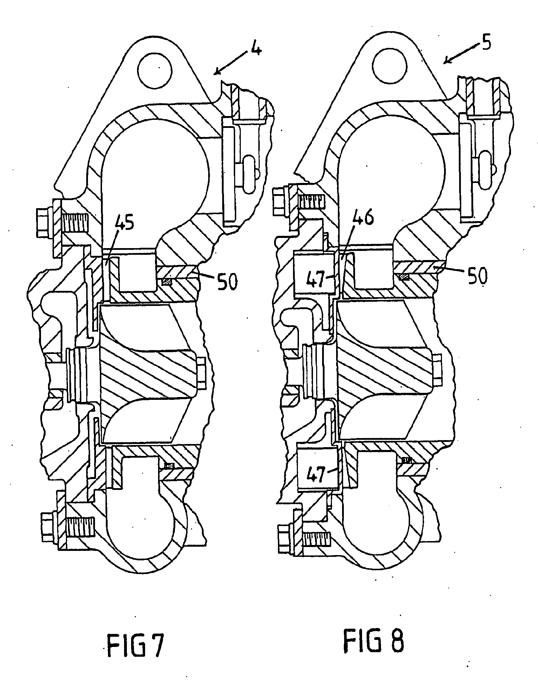

Referring now to Figure 7 there is shown fourth variable turbocharger apparatus with bypass means for bypassing exhaust gases. The variable turbocharger apparatus shown in Figure 7 utilises a different vane design over the turbine to designs shown in previous drawings. In Figure 7, the vane design over the turbine is a short vane 45 design which sets a gap over the turbine, whereby the short vanes may be part of the heat shield or part of the piston. This allows for a design of variable turbocharger apparatus in which the vanes do not go through slots, and in which the insert 50 may be cast as part of the turbine housing.

Referring now to Figure 8, there is shown fifth variable turbocharger apparatus with bypass means for bypassing exhaust gases. The variable turbocharger apparatus shown in Figure 8 is such that it employs a vane design in which vanes 46 are formed as part of the piston. These vanes are allowed to slide through slots in a heat shield 47. The ends of the vanes set a gap over the turbine. The insert 50 is cast as part of the turbine housing.

It is to be appreciated that the embodiments of the invention described above with reference to the accompanying drawings have been given by way of example only and that modifications may be effected.

## Claims

1. Variable turbocharger apparatus (1) comprising a turbine housing (19), a turbine (14) mounted for rotation in the turbine housing (19), an inlet (22) for enabling exhaust gases from an engine to be conducted to the turbine (14) in order to rotate the turbine (14), a chamber (20) which extends around the turbine (14) and which receives the exhaust gases from the inlet (22) before the exhaust gases are conducted to the turbine (14), an outlet (21) for the exhaust gases, a bearing assembly (7) for permitting the rotation of the turbine (14), a slidable piston (15) for closing or restricting an area over the turbine (14), and bypass means (18) for bypassing exhaust gases, and **characterized by** control means (29, 43) which is for controlling the sliding movement of the piston (15) and the bypass means (18) such that the control of the sliding movement of the piston (15) is independent of the control of the bypass means (18), the control means (29. 43) comprising a first control arrangement (29) for controlling the piston (15), and a second control arrangement (43) for controlling the bypass means (18), and the variable turbocharger apparatus (1) being abbe to be controlled such that when the piston (15) is in a position for closing or restricting the area over the turbine (14) then the exhaust gases are able to be bypassed by the bypass means (18) such that the exhaust gases bypass the turbine (14).

2. Variable turbocharger apparatus (1) according to claim 1 in which the first and second control arrangements (29, 43) are controlled such that higher temperature exhaust gases from the outlet of the variable turbocharger apparatus (1) are used to preheat a catalyst system, and/or the control means (29, 43) controls the piston (15) and the bypass means (18) such that higher pumping losses are able to be produced on the engine in order to put the engine under toad, to allow fueling of the engine in order to increase exhaust gas temperature, when regeneration of a particulate filter system is required,

3. Variable turbocharger apparatus (1) according to claim 1 or claim 2 in which the control means (29, 43) controls the piston (15) in order to maintain a given boost pressure when bypass is not being used, and in which when the piston (15) is moved to a position in which the piston (15) restricts the area over the turbine (14), the bypass means (18) is able to control boost pressure.

4. Variable turbocharger apparatus (1) according to any one of the preceding claims in which the control means (29, 43) is such that the bypass means (18) is allowed to bypass gas flow at the top part of the flow range when used in conjunction with the piston (15) such that a smaller volute turbine housing is able to be used in order to reduce pre-heating time of a catalyst system and also to improve low down response time of the turbine (14).

5. Variable turbocharger apparatus (1) according to any one of the preceding claims in which the control means (29, 43) controls the piston (15) and bypass means (18) such that when used in a twin turbocharger application the slidable piston is able to control the first and second stages of the twin turbocharger apparatus.

6. Variable turbocharger apparatus (1) according to any one of the preceding claims, which is for a twin turbocharger application, and in which the control means (29, 43) controls the piston (15) and bypass means (18) such that when used in the twin turbocharger application the slidable piston and bypass on the second stage turbocharger are able to be controlled such that the piston is able to be kept in a closed or restricted position in order to prevent or restrict gas flow through the second stage turbine, and the bypass on the second stage turbocharger is able to bypass and control the boost pressure of the first stage turbocharger and allow exhaust gases to bypass the second stage turbine.

7. Variable turbocharger apparatus (1) according to any one of the preceding claims in which the control means (29, 43) controls the piston (15) and the bypass means (18) such as to allow the variable turbocharger apparatus to be used for engine braking.

8. Variable turbocharger apparatus (1) according to any one of the preceding claims in which the piston (15) is slidable over the bypass exit area, whereby gases exiting the bypass means (18) are encouraged to flow around the piston (15) such as to allow for improved mixing of the gases flowing from the bypass means (18) with the gases flowing from the turbine.

9. Variable turbocharger apparatus (1) according to any one of the preceding claims and including a bypass exit (57) which is formed into the turbine housing outlet (21).

10. Variable turbocharger apparatus (1) according to any one of the preceding claims in which the bypass means (18) is a swing valve bypass means.

11. Variable turbocharger apparatus (1) according to any one of the preceding claims in which the turbine housing (19) is formed with an exhaust outlet without a separate end cover.

12. Variable turbocharger apparatus (1) according to any one of the preceding claims in which the piston (15) is insertable into the turbine housing (19) and locates onto a fork (17) or lever forming part of the control means (29, 43) in order to allow controlled movement of the piston (15) over the turbine (14).

13. Variable turbocharger apparatus (1) according to any one of the preceding claims in which the piston (15) is insertable into the turbine housing (19) such that the piston (15) is allowed to locate onto a fork (17) or lever forming part of the control means (29, 43), and when rotated is such that the fork (17) or lever is prevented from disengaging from the piston (15).

14. Variable turbocharger apparatus (1) according to any one of the preceding claims and including a removable insert (10), and in which the removable insert (10) has vanes (12).

15. Variable turbocharger apparatus (1) according to claim 14 in which the insert (10) has vanes (12), and in which a spring (16) is mounted on the insert (10) such that when the variable turbocharger apparatus (1) is assembled, the spring (16) abuts against the turbine housing (19) and the insert (10) and pushes the ends of the vanes (12) against a heat shield or bearing assembly (7) to allow accurate gas flow around the ends of the vanes (12), and to prevent exhaust gas leakage between the turbine housing (19) and the insert (10).

16. Variable turbocharger apparatus (1) according to any one of claims 1 - 13 and including a non-removable insert (50) in which the piston (15) slides.

17. Variable turbocharger apparatus (1) according to any one of claims 1 - 13 in which the piston (15) is slidable in a bore of a first insert (10), and in which the piston (15) is slidable in a bore of a second insert.

18. Variable turbocharger apparatus (1) according to claim 14 or claim 15 in which the piston (15) has a flange (24), and in which the flange (24) has slots for enabling the flange (24) to slide over the vanes (12) on the insert (10), the flange (24) being able to slide over the vanes (12) on the insert (10) in order to prevent rotation of the piston (15), and in which exhaust gases are allowed to work both sides of the flange (24) on the piston (15), thereby to prevent a high exhaust gas pressure on one side of the flange (24).

19. Variable turbocharger apparatus (1) according to any one of the preceding claims in which the piston (15) has a stop ring (34), and in which the stop ring (34) has a groove (35) for allowing the control means (29, 43) to locate and thereby control movement of the piston (15), and in which the stop ring (34) has at least one slot for allowing the piston (15) to locate onto the control means (29, 43).

20. Variable turbocharger apparatus (1) according to any one of claims 1 - 18 in which the piston (15) has a stop ring (34), and in which the stop ring (34) is allowed to butt against an end of the insert (10) in the variable turbocharger apparatus (1) such as to set a gap over the turbine (14).

21. Variable turbocharger apparatus (1) according to any one of the preceding claims and including a sealing ring (11) for preventing gas leakage between the insert (10) and the piston (15).

22. Variable turbocharger apparatus (1) according to any one of claims 1 - 14 and including vanes formed on a heat shield (33).

23. Variable turbocharger apparatus (1) according to any one of claims 1 - 14 and including vanes (46) formed as part of the piston (15).

24. Variable turbocharger apparatus (1) according to claim 22 or claim 23 in which vanes formed as part of a heat shield or piston are used to set a gap over the turbine (14), between a piston and a heat shield section.

25. Variable turbocharger apparatus (1) according to claim 23 in which the vanes are allowed to slide through slots in a heat shield (47).

26. Variable turbocharger apparatus (1) according to any one of the preceding claims and in which the variable turbocharger apparatus (1) is a single turbocharger unit or a twin turbocharger system.

27. variable turbocharger apparatus (1) according to any one of the preceding claims in which the turbocharger turbine speed is able to be controlled by the piston (15) without using the bypass means (18) when the higher exhaust gas temperature is not needed.

## Patentansprüche

1. Variable Turboladervorrichtung (1), umfassend ein Turbinengehäuse (19), eine Turbine (14), die zur Drehung in dem Turbinengehäuse (19) angebracht ist, einen Einlass (22) zur Ermöglichung des Leitens von Abgasen von einem Motor zu der Turbine (14) zwecks Drehung der Turbine (14), eine Kammer (20), die sich um die Turbine (14) erstreckt und die Abgase von dem Einlass (22) empfängt, bevor die Abgase zu der Turbine (14) geleitet werden, einen Auslass (21) für die Abgase, eine Lageranordnung (7) zur Gestattung der Drehung der Turbine (14), einen verschiebbaren Kolben (15) zum Schließen oder Verengen eines Bereichs über der Turbine (14), und ein Umleitungsmittel (18) zum Umleiten von Abgasen, und **gekennzeichnet durch** ein Steuermittel (29, 43), das für die derartige Steuerung der Schiebebewegung des Kolbens (15) und des Umleitungsmittels (18) bestimmt ist, dass die Steuerung der Schiebebewegung des Kolbens (15) von der Steuerung des Umleitungsmittels (18) unabhängig ist, wobei das Steuermittel (29, 43) eine erste Steueranordnung (29) zum Steuern des Kolbens (15) und eine zweite Steueranordnung (43) zum Steuern des Umleitungsmittels (18) umfasst und die variable Turboladervorrichtung (1) so gesteuert werden kann, dass, wenn sich der Kolben (15) in einer Position zum Schließen oder Verengen des Bereichs über der Turbine (14) befindet, die Abgase dann von dem Umleitungsmittel (18) so umgeleitet werden können, dass die Abgase die Turbine (14) umgehen.

2. Variable Turboladervorrichtung (1) nach Anspruch 1, wobei die erste und die zweite Steueranordnung (29, 43) so gesteuert werden, dass eine höhere Temperatur aufweisende Abgase aus dem Auslass der variablen Turboladervorrichtung (1) dazu verwendet werden, ein Katalysatorsystem vorzuheizen, und/oder das Steuermittel (29, 43) den Kolben (15) und das Umleitungsmittel (18) so steuert, dass größere Pumpverluste am Motor erzeugt werden können, um den Motor unter Last zu setzen und um eine Kraftstoffzufuhr zum Motor zu gestatten, um die Abgastemperatur zu erhöhen, wenn eine Regeneration eines Partikelfiltersystems erforderlich ist.

3. Variable Turboladervorrichtung (1) nach Anspruch 1 oder 2, wobei das Steuermittel (29, 43) den Kolben (15) zum Aufrechterhalten eines gegebenen Aufladedrucks steuert, wenn die Umleitung nicht verwendet wird, und wobei, wenn der Kolben (15) in eine Stellung bewegt wird, in der der Kolben (15) den Bereich über der Turbine (14) verengt, das Umleitungsmittel (18) den Aufladedruck steuern kann.

4. Variable Turboladervorrichtung (1) nach einem der vorhergehenden Ansprüche, wobei das Steuermittel (29, 43) so ist, dass dem Umleitungsmittel (18) gestattet wird, bei Verwendung in Verbindung mit dem Kolben (15), Gasstrom am oberen Teil des Strömungsbereichs umzuleiten, so dass ein kleineres Turbinenspiralgehäuse verwendet werden kann, um die Vorheizzeit eines Katalysatorsystems zu reduzieren und des Weiteren um die Niedrigbereichsansprechzeit der Turbine (14) zu verbessern.

5. Variable Turboladervorrichtung (1) nach einem der vorhergehenden Ansprüche, wobei das Steuermittel (29, 43) den Kolben (15) und das Umleitungsmittel (18) so steuert, dass bei Einsatz in einer Doppel-Turboladeranwendung der verschiebbare Kolben die erste und die zweite Stufe der Doppel-Turboladervorrichtung steuern kann.

6. Variable Turboladervorrichtung (1) nach einem der vorhergehenden Ansprüche, die für eine Doppel-Turboladeranwendung bestimmt ist, und wobei das Steuermittel (29, 43) den Kolben (15) und das Umleitungsmittel (18) so steuert, dass bei Einsatz in der Doppel-Turboladeranwendung der verschiebbare Kolben und die Umleitung an dem Turbolader der zweiten Stufe so gesteuert werden können, dass der Kolben in einer geschlossenen oder verengten Stellung gehalten werden kann, um Gasstrom durch die Turbine der zweiten Stufe zu verhindern oder zu drosseln, und die Umleitung an dem Turbolader der zweiten Stufe den Aufladedruck des Turboladers der ersten Stufe umleiten und steuern kann und gestatten kann, dass Abgase die Turbine der zweiten Stufe umgehen.

7. Variable Turboladervorrichtung (1) nach einem der vorhergehenden Ansprüche, wobei das Steuermittel (29, 43) den Kolben (15) und das Umleitungsmittel (18) so steuert, dass die Verwendung der variablen Turboladervorrichtung für Motorbremsung gestattet wird.

8. Variable Turboladervorrichtung (1) nach einem der vorhergehenden Ansprüche, wobei der Kolben (15) über den Umleitungsaustrittsbereich gleiten kann, wodurch gefördert wird, dass das Umleitungsmittel (18) verlassende Gase um den Kolben (15) herum strömen, um ein verbessertes vermischen der von dem Umleitungsmittel (18) strömenden Gase mit den von der Turbine strömenden Gasen zu gestatten.

9. Variable Turboladervorrichtung (1) nach einem der vorhergehenden Ansprüche und mit einem Umleitungsausgang (57), der in dem Turbinengehäuseauslass (21) ausgebildet ist.

10. Variable Turboladervorrichtung (1) nach einem der vorhergehenden Ansprüche, wobei das Umleitungsmittel (18) ein Klappenventilumleitungsmittel ist.

11. Variable Turboladervorrichtung (1) nach einem der vorhergehenden Ansprüche, wobei das Turbinengehäuse (19) mit einem Abgasauslass ohne getrennte Endabdeckung ausgebildet ist.

12. Variable Turboladervorrichtung (1) nach einem der vorhergehenden Ansprüche, wobei der Kolben (15) in das Turbinengehäuse (19) eingesetzt werden kann und auf einer Gabel (17) oder einem Hebel positioniert wird, die bzw. der Teil des Steuermittels (29, 43) bildet, um eine gesteuerte Bewegung des Kolbens (15) über die Turbine (14) zu gestatten.

13. Variable Turboladervorrichtung (1) nach einem der vorhergehenden Ansprüche, wobei der Kolben (15) so in das Turbinengehäuse (19) eingesetzt werden kann, dass der Kolben (15) auf einer Gabel (17) oder einem Hebel, die Teil des Steuermittels (29, 43) bilden, positioniert werden kann, und bei Drehung derart ist, dass die Gabel (17) oder der Hebel daran gehindert werden, aus dem Kolben (15) auszurücken.

14. Variable Turboladervorrichtung (1) nach einem der vorhergehenden Ansprüche, und mit einem entfernbaren Einsatz (10), wobei der entfernbare Einsatz (10) Schaufeln (12) aufweist.

15. Variable Turboladervorrichtung (1) nach Anspruch 14, wobei der Einsatz (10) Schaufeln (12) aufweist und wobei eine Feder (16) so an dem Einsatz (10) angebracht ist, dass, wenn die variable Turboladervorrichtung (1) zusammengebaut ist, die Feder (16) an dem Turbinengehäuse (19) und dem Einsatz (10) anliegt und die Enden der Schaufeln (12) gegen einen Wärmeschild oder eine Lageranordnung (7) drückt, um einen bogenförmigen Gasstrom um die Enden der Schaufeln (12) herum zu gestatten und eine Abgasleckage zwischen dem Turbinengehäuse (19) und dem Einsatz (10) zu verhindern.

16. variable Turboladervorrichtung (1) nach einem der Ansprüche 1 - 13, und mit einem nicht entfernbaren Einsatz (50), in dem der Kolben (15) gleitet.

17. Variable Turboladervorrichtung (1) nach einem der Ansprüche 1 - 13, wobei der Kolben (15) in einer Bohrung eines ersten Einsatzes (10) verschiebbar ist und wobei der Kolben (15) in einer Bohrung eines zweiten Einsatzes verschiebbar ist.

18. Variable Turboladervorrichtung (1) nach Anspruch 14 oder 15, wobei der Kolben (15) einen Flansch (24) aufweist und wobei der Flansch (24) Schlitze aufweist, die ermöglichen, dass der Flansch (24) über die Schaufeln (12) am Einsatz (10) gleitet, wobei der Flansch (24) über die Schaufeln (12) am Einsatz (10) gleiten kann, um eine Drehung des Kolbens (15) zu verhindern, und wobei Abgasen gestattet wird, auf beiden Seiten des Flansches (24) am Kolben (15) zu arbeiten, um dadurch einen hohen Abgasdruck auf einer Seite des Flansches (24) zu verhindern.

19. Variable Turboladervorrichtung (1) nach einem der vorhergehenden Ansprüche, wobei der Kolben (15) einen Anschlagring (34) aufweist und wobei der Anschlagring (34) eine Nut (35) aufweist, die gestattet, dass das Steuermittel (29, 43) den Kolben (15) positioniert und dadurch seine Bewegung steuert, und wobei der Anschlagring (34) mindestens einen Schlitz aufweist, der die Positionierung des Kolbens (15) auf dem Steuermittel (29, 43) gestattet.

20. Variable Turboladervorrichtung (1) nach einem der Ansprüche 1 - 18, wobei der Kolben (15) einen Anschlagring (34) aufweist und wobei dem Anschlagring (34) gestattet wird, an ein Ende des Einsatzes (10) in der variablen Turboladervorrichtung (1) anzustoßen, um einen Spalt über der Turbine (14) einzustellen.

21. Variable Turboladervorrichtung (1) nach einem der vorhergehenden Ansprüche, und mit einem Dichtungsring (11) zum Verhindern einer Gasleckage zwischen dem Einsatz (10) und dem Kolben (15).

22. Variable Turboladervorrichtung (1) nach einem der Ansprüche 1 - 14, und mit an einem Wärmeschild (33) angeformten Schaufeln.

23. Variable Turboladervorrichtung (1) nach einem der Ansprüche 1 - 14, und mit als Teil des Kolbens (15) ausgebildeten Schaufeln (46).

24. Variable Turboladervorrichtung (1) nach Anspruch 22 oder 23, wobei als Teil eines Wärmeschilds oder Kolbens ausgebildete Schaufeln zum Einstellen eines Spalts über der Turbine (14) zwischen einem Kolben und einem Wärmeschildabschnitt verwendet werden.

25. Variable Turboladervorrichtung (1) nach Anspruch 23, wobei den Schaufeln gestattet wird, durch Schlitze in einem Wärmeschild (47) zu gleiten.

26. Variable Turboladervorrichtung (1) nach einem der vorhergehenden Ansprüche, und wobei die variable Turboladervorrichtung (1) eine Einzel-Turboladereinheit oder ein Doppel-Turboladersystem ist.

27. variable Turboladervorrichtung (1) nach einem der vorhergehenden Ansprüche, wobei die Turboladerturbinendrehzahl ohne Verwendung des Umleitungsmittels (18) durch den Kolben (15) gesteuert werden kann, wenn die höhere Abgastemperatur nicht erforderlich ist.

## Revendications

1. Appareil turbocompresseur variable (1) comprenant un carter de turbine (19), une turbine (14) montée à rotation dans le carter de turbine (19), une entrée (22) pour permettre aux gaz d'échappement d'un moteur d'être conduits jusqu'à la turbine (14) afin de faire tourner la turbine (14), une chambre (20) qui s'étend autour de la turbine (14) et qui reçoit les gaz d'échappement provenant de l'entrée (22) avant que les gaz d'échappement ne soient conduits jusqu'à la turbine (14), une sortie (21) pour les gaz d'échappement, un ensemble de palier (7) pour permettre la rotation de la turbine (14), un piston coulissant (15) pour fermer ou restreindre une zone au-dessus de la turbine (14), et un moyen de dérivation (18) pour dériver les gaz d'échappement, et **caractérisé par** un moyen de commande (29, 43) qui sert à commander le mouvement de coulissement du piston (15) et le moyen de dérivation (18) de telle sorte que la commande du mouvement de coulissement du piston (15) soit indépendante de la commande du moyen de dérivation (18), le moyen de commande (29, 43) comprenant un premier agencement de commande (29) pour commander le piston (15) et un deuxième agencement de commande (43) pour commander le moyen de dérivation (18), et l'appareil de turbocompresseur variable (1) étant capable d'être commandé de telle sorte que lorsque le piston (15) est dans une position de fermeture ou de restriction de la zone au-dessus de la turbine (14), les gaz d'échappement soient capables d'être dérivés par le moyen de dérivation (18) de telle sorte que les gaz d'échappement contournent la turbine (14).

2. Appareil turbocompresseur variable (1) selon la revendication 1, dans lequel les premier et deuxième agencements de commande (29, 43) sont commandés de telle sorte que des gaz d'échappement à plus haute température provenant de la sortie de l'appareil turbocompresseur variable (1) soient utilisés pour préchauffer un système de catalyseur, et/ou le moyen de commande (29, 43) commande le piston (15) et le moyen de dérivation (18) de telle sorte que des pertes de pompage plus élevées puissent être produites au niveau du moteur afin de mettre le moteur en charge, pour permettre l'alimentation en carburant du moteur afin d'augmenter la température des gaz d'échappement, lorsque la régénération d'un système de filtre à particules est requise.

3. Appareil turbocompresseur variable (1) selon la revendication 1 ou la revendication 2, dans lequel le moyen de commande (29, 43) commande le piston (15) afin de maintenir une pression de suralimentation donnée lorsque la dérivation n'est pas utilisée, et dans lequel, lorsque le piston (15) est déplacé dans une position dans laquelle le piston (15) restreint la zone au-dessus de la turbine (14), le moyen de dérivation (18) est capable de commander la pression de suralimentation.

4. Appareil turbocompresseur variable (1) selon l'une quelconque des revendications précédentes, dans lequel le moyen de commande (29, 43) est tel que le moyen de dérivation (18) soit en mesure de dériver l'écoulement de gaz au niveau de la partie supérieure de la gamme d'écoulement lorsqu'il est utilisé conjointement avec le piston (15), de telle sorte qu'un plus petit carter de turbine à volute puisse être utilisé afin de réduire le temps de préchauffage d'un système de catalyseur et aussi afin d'améliorer le temps de réponse bas de la turbine (14).

5. Appareil turbocompresseur variable (1) selon l'une quelconque des revendications précédentes, dans lequel le moyen de commande (29, 43) commande le piston (15) et le moyen de dérivation (18) de telle sorte que lorsqu'il est utilisé dans une application à turbocompresseur double, le piston coulissant puisse commander les premier et deuxième étages de l'appareil turbocompresseur double.

6. Appareil turbocompresseur variable (1) selon l'une quelconque des revendications précédentes, utilisé pour une application à turbocompresseur double, et dans lequel le moyen de commande (29, 43) commande le piston (15) et le moyen de dérivation (18) de telle sorte que lorsqu'ils sont utilisés dans l'application de turbocompresseur double, le piston coulissant et la dérivation sur le turbocompresseur de deuxième étage puissent être commandés de telle sorte que le piston puisse être maintenu dans une position fermée ou restreinte afin d'empêcher ou de restreindre l'écoulement de gaz à travers la turbine de deuxième étage, et que la dérivation sur le turbocompresseur de deuxième étage soit capable de dériver et de commander la pression de suralimentation du turbocompresseur de premier étage et de permettre aux gaz d'échappement de contourner la turbine de deuxième étage.

7. Appareil turbocompresseur variable (1) selon l'une quelconque des revendications précédentes, dans lequel le moyen de commande (29, 43) commande le piston (15) et le moyen de dérivation (18) de manière à permettre à l'appareil turbocompresseur variable d'être utilisé pour la fonction de frein moteur.

8. Appareil turbocompresseur variable (1) selon l'une quelconque des revendications précédentes, dans lequel le piston (15) peut coulisser par-dessus la zone de sortie de la dérivation, les gaz sortant du moyen de dérivation (18) étant ainsi encouragés à s'écouler autour du piston (15) de manière à permettre un mélange amélioré des gaz s'écoulant depuis le moyen de dérivation (18) avec les gaz s'écoulant depuis la turbine.

9. Appareil turbocompresseur variable (1) selon l'une quelconque des revendications précédentes, comportant une sortie de dérivation (57) qui est formée dans la sortie (21) du carter de turbine.

10. Appareil turbocompresseur variable (1) selon l'une quelconque des revendications précédentes, dans lequel le moyen de dérivation (18) est un moyen de dérivation à vanne à clapet oscillant.

11. Appareil turbocompresseur variable (1) selon l'une quelconque des revendications précédentes, dans lequel le carter de turbine (19) est formé avec une sortie d'échappement sans recouvrement d'extrémité séparé.

12. Appareil turbocompresseur variable (1) selon l'une quelconque des revendications précédentes, dans lequel le piston (15) peut être inséré dans le carter de turbine (19) et se place sur une fourche (17) ou un levier faisant partie du moyen de commande (29, 43) afin de permettre un mouvement commandé du piston (15) au-dessus de la turbine (14) .

13. Appareil turbocompresseur variable (1) selon l'une quelconque des revendications précédentes, dans lequel le piston (15) peut être inséré dans le carter de turbine (19) de telle sorte que le piston (15) puisse se placer sur une fourche (17) ou un levier faisant partie du moyen de commande (29, 43), et, lorsqu'il est tourné, fasse en sorte que la fourche (17) ou le levier ne puisse pas se désengager du piston (15).

14. Appareil turbocompresseur variable (1) selon l'une quelconque des revendications précédentes et comportant un insert amovible (10), et dans lequel l'insert amovible (10) a des ailettes (12).

15. Appareil turbocompresseur variable (1) selon la revendication 14, dans lequel l'insert (10) a des ailettes (12) et dans lequel un ressort (16) est monté sur l'insert (10) de telle sorte que lorsque l'appareil turbocompresseur variable (1) est assemblé, le ressort (16) bute contre le carter de turbine (19) et l'insert (10) et pousse les extrémités des ailettes (12) contre un bouclier thermique ou un ensemble de palier (7) pour permettre un écoulement de gaz précis autour des extrémités des ailettes (12), et pour empêcher une fuite de gaz d'échappement entre le carter de turbine (19) et l'insert (10).

16. Appareil turbocompresseur variable (1) selon l'une quelconque des revendications 1 à 13, et comportant un insert non amovible (50) dans lequel coulisse le piston (15).

17. Appareil turbocompresseur variable (1) selon l'une quelconque des revendications 1 à 13, dans lequel le piston (15) peut coulisser dans un alésage d'un premier insert (10), et dans lequel le piston (15) peut coulisser dans l'alésage d'un deuxième insert.

18. Appareil turbocompresseur variable (1) selon la revendication 14 ou 15, dans lequel le piston (15) a une bride (24), et dans lequel la bride (24) a des fentes pour permettre à la bride (24) de coulisser par-dessus les ailettes (12) sur l'insert (10), la bride (24) étant capable de coulisser par-dessus les ailettes (12) sur l'insert (10) afin d'empêcher la rotation du piston (15), et dans lequel des gaz d'échappement peuvent agir des deux côtés de la bride (24) sur le piston (15), pour ainsi empêcher une pression de gaz d'échappement élevée d'un côté de la bride (24).

19. Appareil turbocompresseur variable (1) selon l'une quelconque des revendications précédentes, dans lequel le piston (15) a une bague de butée (34), et dans lequel la bague de butée (34) a une gorge (35) pour permettre au moyen de commande (29, 43) de se placer et donc de commander le mouvement du piston (15), et dans lequel la bague de butée (34) a au moins une fente pour permettre au piston (15) de se placer sur le moyen de commande (29, 43).

20. Appareil turbocompresseur variable (1) selon l'une quelconque des revendications 1 à 18, dans lequel le piston (15) a une bague de butée (34), et dans lequel la bague de butée (34) peut venir buter contre une extrémité de l'insert (10) dans l'appareil turbocompresseur variable (1) de manière à fixer un espace au-dessus de la turbine (14).

21. Appareil turbocompresseur variable (1) selon l'une quelconque des revendications précédentes et comportant une bague d'étanchéité (11) pour empêcher une fuite de gaz entre l'insert (10) et le piston (15).

22. Appareil turbocompresseur variable (1) selon l'une quelconque des revendications 1 à 14 et comportant des ailettes formées sur un bouclier thermique (33).

23. Appareil turbocompresseur variable (1) selon l'une quelconque des revendications 1 à 14 et comportant des ailettes (46) formées en tant que partie du piston (15).

24. Appareil turbocompresseur variable (1) selon la revendication 22 ou la revendication 23, dans lequel des ailettes formées en tant que partie du bouclier thermique ou du piston sont utilisées pour fixer un espace par-dessus la turbine (14), entre un piston et une section de bouclier thermique.

25. Appareil turbocompresseur variable (1) selon la revendication 23, dans lequel les ailettes peuvent coulisser à travers des fentes dans un bouclier thermique (47).

26. Appareil turbocompresseur variable (1) selon l'une quelconque des revendications précédentes, et dans lequel l'appareil turbocompresseur variable (1) est une unité turbocompresseur unique ou un système turbocompresseur double.

27. Appareil turbocompresseur variable (1) selon l'une quelconque des revendications précédentes, dans lequel la vitesse de la turbine du turbocompresseur peut être commandée par le piston (15) sans utiliser le moyen de dérivation (18) lorsque la température plus élevée des gaz d'échappement n'est pas requise.
